# EUROPÄISCHE PATENTSCHRIFT

(11) **EP 1 438 510 B1**
(45) Veröffentlichungstag und Bekanntmachung des Hinweises auf die Patenterteilung: **18.07.2007**
(21) Anmeldenummer: 02776804.3
(22) Anmeldetag: 11.10.2002
(51) Int. Cl.: F04C 18/344, F04C 29/00, F04C 23/00

(54) **VAKUUMPUMPE**
VACUUM PUMP
POMPE A VIDE

(30) Priorität: 15.10.2001 DE 10150801; 04.07.2002 DE 10230057
(43) Veröffentlichungstag der Anmeldung: 21.07.2004
(73) Patentinhaber: ixetic Hückeswagen GmbH, 42499 Hückeswagen (DE)
(72) Erfinder: OTTO, Dieter, 58256 Ennepetal (DE); SCHULER, Friedrich, 42499 Hückeswagen (DE)
(74) Vertreter: Duschl, Edgar Johannes
(86) Internationale Anmeldenummer: PCT/DE2002/003839
(87) Internationale Veröffentlichungsnummer: WO 2003/036094

(56) Entgegenhaltungen:
- EP-A- 0 477 601
- EP-A- 0 874 158
- DE-C- 19 844 904
- US-A- 4 838 772
- PATENT ABSTRACTS OF JAPAN Bd. 011, Nr. 301 (M-628), 30. September 1987 (1987-09-30) -& JP 62 091688 A (DIESEL KIKI CO LTD), 27. April 1987 (1987-04-27)

## Beschreibung

Die Erfindung betrifft eine Vakuumpumpe, insbesondere für Bremskraftverstärker-Anlagen in Kraftfahrzeugen, mit einem Gehäuse, in dem ein angetriebener Rotor aus Kunststoff drehbar aufgenommen ist.

Eine derartige Vakuumpumpe ist in der deutschen Patentschrift DE 198 44 904 C1 beschrieben. Die bekannte Vakuumpumpe umfasst einen Rotor aus einem thermoplastischen Kunststoff. Die Patentschrift lehrt, dass durch das Einbringen von Hohlräumen in den Rotor dünne Wandungen realisiert werden können. Die dünnen Wandungen können durch Einlegen entsprechend ausgebildeter Kerne in einem zur Herstellung des Rotors verwendeten Spritzgießwerkzeug erzeugt werden. Die dünnwandige Ausbildung des Rotors dient dazu, Materialanhäufungen zu vermeiden, die zu einer unerwünschten Schwindung und/oder Verzug des spritzgegossenen Rotors führen können. Die dünnwandige Ausbildung des Rotors führt aber auch zu einer geringeren Steifigkeit und Belastbarkeit des Rotors. Aus diesem Grund wird in der vorveröffentlichten Patentschrift vorgeschlagen, den Rotor nicht nur an einem, sondern an beiden Enden zu lagern. Die beiden Lager führen zu einem komplizierten und herstellungskostenintensiven Aufbau des Gehäuses der Vakuumpumpe.

Auch bekannt sind Kunststoffrotoren mit den Rotor durchdringende Wellen aus Metall, welche entsprechend in den Pumpengehäusen gelagert sind. Sie dienen damit als Antriebswelle und als Lagerung für den Rotor. Die separaten Lagerungen der Metallwelle im Gehäuse erfordern Bauraum, erhöhen das Gewicht und erfordern mehr Material.

Aufgabe der Erfindung ist es daher, eine Vakuumpumpe der eingangs geschilderten Art zu schaffen, die einfach aufgebaut und kostengünstig herstellbar ist.

Die Aufgabe wird gelöst durch eine Vakuumpumpe, insbesondere für Bremskraftverstärker-Anlagen in Kraftfahrzeugen, mit einem Gehäuse, in dem ein angetriebener Rotor aus Kunststoff drehbar aufgenommen ist, wobei der Rotor auf der der Antriebsseite gegenüberliegenden Seite einen im Rotor angeordneten Zapfen aus Metall aufweist und der Zapfen keine Lagerstelle im Gehäuse der Vakuumpumpe aufweist.

Die Aufgabe ist bei einer Vakuumpumpe, insbesondere für Bremskraftverstärker-Anlagen in Kraftfahrzeugen, mit einem Gehäuse, in dem ein angetriebener Rotor aus Kunststoff drehbar aufgenommen ist, weiterhin dadurch gelöst, dass der Rotor aus einem duroplastischen Kunststoff gebildet ist. Auch wird ein Rotor bevorzugt, welcher einseitig gelagert ist. Der duroplastische Kunststoff verleiht dem Rotor eine viel höhere Steifigkeit und Stabilität als ein thermoplastischer Kunststoff. Dadurch ist es möglich, den Rotor nur einseitig in dem Gehäuse zu lagern. Die einseitige Lagerung des Rotors liefert den Vorteil, dass auf eine aufwendige Zentrierung des Gehäusedeckels relativ zu dem Gehäuse verzichtet werden kann. Durch den Wegfall des zweiten Lagers vereinfachen sich die Herstellung und die Montage der Vakuumpumpe erheblich.

Ein bevorzugtes Ausführungsbeispiel der Vakuumpumpe ist dadurch gekennzeichnet, dass der Rotor massiv oder dickwandig ausgebildet ist. Die massive oder dickwandige Ausbildung des Rotors führt zu einer viel höheren Stabilität als bei einem Rotor aus thermoplastischem Kunststoff, der in Folge von Schwindung und Verzug nicht massiv ausgebildet werden kann. Außerdem können zur Herstellung des massiv ausgebildeten Rotors viel einfacher aufgebaute Spritzgießwerkzeuge ohne Kerne verwendet werden.

Ein weiteres bevorzugtes Ausführungsbeispiel der Vakuumpumpe ist dadurch gekennzeichnet, dass der Rotor im Wesentlichen die Gestalt eines Kreiszylinders aufweist. Diese Gestalt ist fertigungstechnisch besonders einfach zu realisieren. Außerdem liefert die rotationssymmetrische Gestalt des Rotors den Vorteil, dass der spritzgegossene Rotor ohne weiteres auf herkömmlichen Drehmaschinen oder Schleifmaschinen spanend bearbeitet werden kann.

Ein weiteres bevorzugtes Ausführungsbeispiel der Vakuumpumpe ist dadurch gekennzeichnet, dass der Rotor einen in radialer Richtung durchgehenden Schlitz für einen Flügel aufweist. Der Schlitz dient dazu, den Flügel in radialer Richtung verschiebbar aufzunehmen. Es ist auch möglich, mehrere Schlitze zur Aufnahme jeweils eines Flügels sternförmig in dem Rotor auszubilden.

Ein weiteres bevorzugtes Ausführungsbeispiel der Vakuumpumpe ist dadurch gekennzeichnet, dass der Rotor an einem Ende mit der Antriebswelle koppelbar und nur an diesem Ende in dem Gehäuse gelagert ist, und an dem anderen Ende mit einer Deckscheibe ausgestattet ist, die einstückig mit dem Rotor ausgebildet ist und den Schlitz in axialer Richtung abschließt. Durch den Schlitz wird der kreiszylinderförmige Rotor in Längsrichtung in zwei Halbkreiszylinder unterteilt. Die Deckscheibe dient dazu, die beiden halbkreiszylinderförmigen Rotorteile miteinander zu verbinden. Dadurch bekommt der Rotor eine hohe Stabilität.

Ein weiteres bevorzugtes Ausführungsbeispiel der Vakuumpumpe ist dadurch gekennzeichnet, dass die Deckscheibe mit radialem Spiel in einer Ausnehmung in einem Teil des Gehäuses, insbesondere einem Gehäusedeckel, zumindest teilweise aufgenommen ist. Das radiale Spiel zwischen Deckel und Gehäuse gewährleistet, dass sich die Deckscheibe ohne Reibungsverluste in der Ausnehmung drehen kann. Eine Berührung zwischen Deckscheibe und Ausnehmung, wie bei einem Lager, findet nicht statt.

Ein weiteres bevorzugtes Ausführungsbeispiel der Vakuumpumpe ist dadurch gekennzeichnet, dass die Deckscheibe mit axialem Spiel in der Ausnehmung aufgenommen ist. Dadurch wird sichergestellt, dass im Betrieb der Vakuumpumpe kein Verschleiß aufgrund von Reibung zwischen der Deckscheibe und der Ausnehmung auftritt.

Ein weiteres bevorzugtes Ausführungsbeispiel ist dadurch gekennzeichnet, dass auf der der Antriebswelle abgewandten Seite in den Rotor ein Zapfen eingegossen ist, der zum Antrieb eines weiteren Förderaggregats dient. Der Zapfen kann auch einstückig mit dem Rotor ausgebildet sein, besteht aber vorzugsweise als Einlegeteil aus Metall und wird unter anderem im Spritzgießverfahren in den Rotor eingegossen. Der Zapfen dient dazu, an seinem freien Ende formschlüssig, zum Beispiel als Sechskant ausgebildet, beispielsweise mit dem Rotor einer weiteren Pumpe gekoppelt zu werden. Bei der zusätzlichen Pumpe kann es sich zum Beispiel um eine kraftausgeglichene Sperrflügelpumpe handeln.

Ein weiteres bevorzugtes Ausführungsbeispiel der Vakuumpumpe ist dadurch gekennzeichnet, dass der Rotor aus einem Kunststoff auf Phenolharz- oder Epoxidharzbasis, insbesondere mit einem Anteil Polytetrafluoräthylen, gebildet ist. Bei im Rahmen der vorliegenden Erfindung durchgeführten Untersuchungen wurden mit diesen Werkstoffen die besten Ergebnisse erzielt. Vorzugs-weise ist der Kunststoff mit Glas-, Mineral- und/oder Kohlefasern verstärkt. Außerdem wird der Rotor nach der Formgebung vorzugsweise getempert, und zwar bei Temperaturen zwischen 150° C und 350°C. Durch das Tempern wird die Vernetzung in dem duroplastischen Kunststoff vollständig zu Ende geführt. Der Anteil Polytetrafluoräthylen beträgt vorzugsweise zwischen 0,5 und 20 %. Bei einer besonders bevorzugten Ausführungsform weist der Rotor eine geschliffene Oberfläche auf, die dazu dient, den Reibungsverschleiß im Betrieb zu reduzieren.

Bevorzugt wird auch eine Vakuumpumpe, bei welcher der Rotor mit einer Gleitbeschichtung zur Minderung von Reibung und Verschleiß und/oder als Lebensdauerschmierschicht versehen ist, insbesondere aus aushärtbaren organischen Polymeren mit einer Mindestschichtdicke von 30 ± 10 µm.

Bevorzugt wird eine Vakuumpumpe, bei welcher der Zapfen als Dichtzapfen dient und seine Oberfläche die Lauffläche für einen Wellendichtring darstellt. Erfindungsgemäß wird in den Kunststoffrotor der Zapfen als Einlegeteil formschlüssig eingespritzt oder eingegossen. Bevorzugt wird auch eine Vakuumpumpe, bei welcher der Formschluss zwischen Kunststoffrotor und Metallzapfen durch eine Rändelung oder einen Sechskant oder eine oder mehrere Anflächungen oder eine Verzahnung am Zapfen dargestellt ist.

Eine erfindungsgemäße Vakuumpumpe zeichnet sich dadurch aus, dass der Kunststoffrotor als Rotor für eine Tandempumpe dient, welche eine ölgeschmierte Vakuumpumpe und eine Kraftstoffförderpumpe aufweist.

Bevorzugt wird auch eine Vakuumpumpe, bei welcher der Wellendichtring eine Medientrennung zwischen dem Vakuum und dem Kraftstoff realisiert. Vorzugsweise ist bei der Vakuumpumpe die Oberfläche des Dichtzapfens glatt und das Metall oberflächlich oder durchgängig gehärtet.

Eine weitere erfindungsgemäße Vakuumpumpe zeichnet sich dadurch aus, dass der Dichtzapfen zusätzlich als Antrieb für eine Kraftstoffförderpumpe dient.

Weitere Vorteile, Merkmale und Einzelheiten der Erfindung ergeben sich aus der nachfolgenden Beschreibung, in der unter Bezugnahme auf die Zeichnung verschiedene Ausführungsbeispiele im Einzelnen beschrieben sind. Es zeigen:
- Figur 1: die Darstellung eines Schnitts in Längsrichtung des Rotors durch eine Vakuumpumpe, die keine Ausführungsbeispiele der Erfindung darstellt;
- Figur 2: eine perspektivische Darstellung des Rotors aus Figur 1 in Alleinstellung;
- Figur 3: den Rotor aus Figur 2 im Längsschnitt und
- Figur 4: einen teilweise geschnitten dargestellten Rotor gemäß einer ersten Ausführungsform mit einem eingegossenen Zapfen.
- Figur 5: eine weitere Ausführungsform eines Rotors mit einem eingegossenen Zapfen.

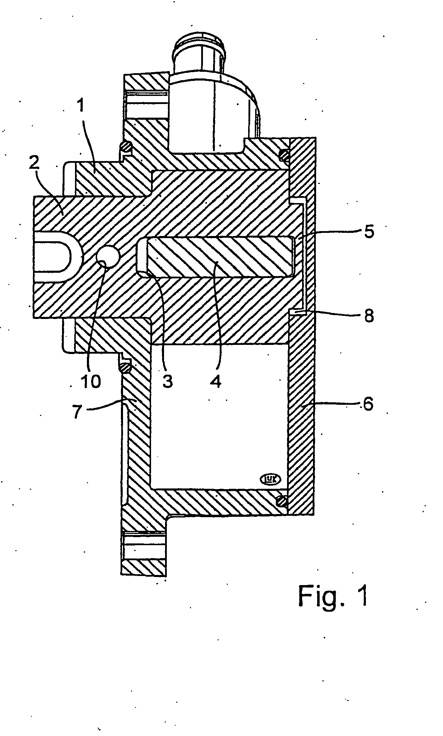

Die in Figur 1 dargestellte Vakuumpumpe umfasst ein topfförmiges Gehäuse 1; in dem ein Rotor 2 aus duroplastischem Kunststoff drehbar aufgenommen ist. In einem axialen Abschnitt des Rotors 2 ist ein in Richtung der Drehachse angeordneter Schlitz 3 ausgebildet, der in radialer Richtung durch den Rotor 2 hindurchgeht. Der durchgehende Schlitz 3 dient zur Aufnahme eines Flügels 4, der das Arbeitsvolumen der Vakuumpumpe begrenzt. Die in Figur 1 dargestellte Vakuumpumpe wird, da sie nur einen einzigen Flügel 4 aufweist, auch als Monoflügelzellenpumpe bezeichnet. Die Funktionsweise einer Flügelzellenpumpe wird als bekannt vorausgesetzt und deshalb im Folgenden nicht weiter erläutert.

Der Rotor 2 hat im Wesentlichen die Gestalt eines Kreiszylinders, der durch den Schlitz 3 in zwei Kreiszylinderhälften unterteilt ist. Die beiden Kreiszylinderhälften sind an einem Ende durch eine Deckscheibe 5 miteinander verbunden, die den Schlitz 3 in axialer Richtung begrenzt. Die Deckscheibe 5 hat die Form einer Kreisscheibe, deren Durchmesser kleiner ist als der Durchmesser des Rotors im Bereich des Schlitzes 3. Die Deckscheibe 5 ist in einem Ge-häusedeckel 6 in einer Ausnehmung 8 aufgenommen. Der Gehäusedeckel 6 verschließt das Gehäuse 1. Die Ausnehmung 8 in dem Gehäusedeckel 6 ist so bemessen, dass zwischen der Deckscheibe 5 und der Ausnehmung 8 sowohl in radialer als auch in axialer Richtung etwas Spiel vorhanden ist.

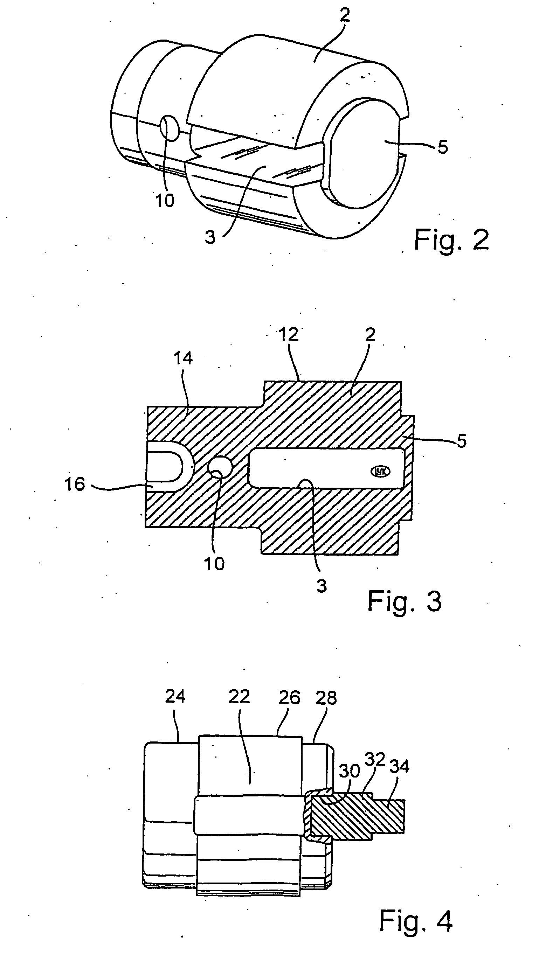

In den Figuren 2 und 3 sieht man, dass auf der der Deckscheibe 5 entgegengesetzten Seite des Schlitzes 3 eine Ölzuführbohrung 10 in dem Rotor 2 vorgesehen ist. Ausgehend von der Deckscheibe 5 weist der Rotor 2 zunächst einen Flügelabschnitt 12 auf, der einen deutlich größeren Außendurchmesser aufweist als die Deckscheibe 5. In dem Flügelabschnitt 12 ist der Schlitz 3 zur Aufnahme des Flügels ausgespart. Auf den Flügelabschnitt 12 folgt ein Lagerabschnitt 14, dessen Außendurchmesser deutlich kleiner als der Außendurchmesser des Flügelabschnitts 12 ist, aber etwas größer als der Außendurchmesser der Deckscheibe 5. Der Lagerabschnitt 14 bildet zusammen mit der zugehörigen Gehäusefläche ein Gleitlager. Die in dem Lagerabschnitt 14 angeordnete Bohrung 10 dient dazu, das Lager mit Schmiermittel zu versorgen. In dem freien Ende des Lagerabschnitts 14 ist eine zentrale Ausnehmung 16 für ein Kupplungselement ausgebildet. Das (nicht dargestellte) Kupplungselement dient dazu, die Drehmomentübertragung von einer Antriebswelle auf den Rotor 2 sicherzustellen.

In Figur 4 ist eine ersten Ausführungsform eines Rotors 22 teilweise geschnitten dargestellt. Der Rotor 22 weist wie der in den Figuren 2 und 3 dargestellte Rotor im Wesentlichen die Gestalt eines Kreiszylinders mit drei Abschnitten auf, die unterschiedliche Außendurchmesser haben. Ein Lagerabschnitt 24 ist an dem antriebswellenseitigen Ende des Rotors 22 ausgebildet. Auf den Lagerabschnitt 24 folgt ein Flügelabschnitt 26, der einen größeren Außendurchmesser als der Lagerabschnitt 24 aufweist. Danach folgt eine Deckscheibe 28, die den gleichen Außendurchmesser, aber eine geringere Dicke wie der Lagerabschnitt 24 aufweist. In die Deckscheibe 28 ist ein Ende 30 eines Zapfens 32 aus Metall eingegossen. Der Zapfen 32 kann an seinem freien Ende 34 als Sechskant ausgebildet sein, um eine formschlüssige Verbindung mit dem Rotor einer weiteren Pumpeneinheit zu ermöglichen.

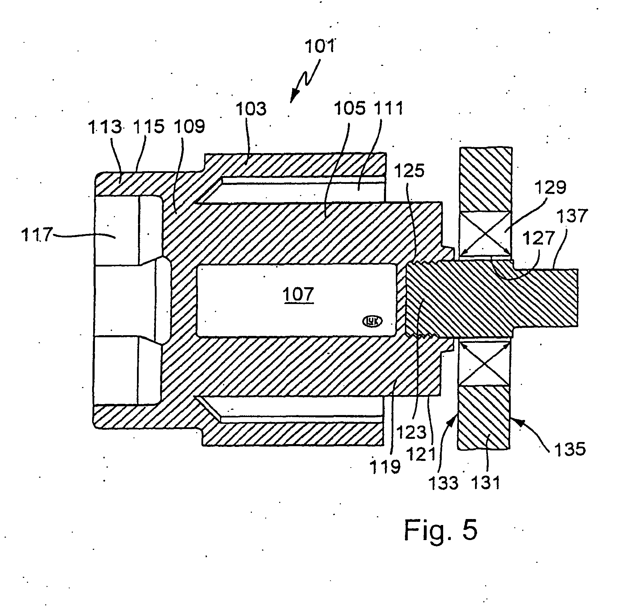

In Figur 5 ist eine weitere Ausführungsform eines Rotors mit einem Metallzapfen dargestellt. Der Kunststoffrotor 101 weist einen Außenteil 103 und einen Innenteil 105 auf und kann aus einem Duroplast oder einem Thermoplast, z. B. mittels eines Spritzgießverfahrens, hergestellt sein. Der Innenteil 105 ist im wesentlichen zylinderförmig und weist einen rechteckigen Durchbruch 107 auf, der zur Führung eines Flügels dient. Der Außenteil 103 ist im wesentlichen ebenfalls ein zylinderförmiger Körper, der einen größeren Durchmesser als der Innenteil 105 aufweist, wobei beide Zylinderkörper im Bereich des Schlitzes 107 für den Flügel unterbrochen sind. Die beiden Rotorteile 103 und 105 sind in einem Bodenbereich 109 miteinander verbunden und können zusätzlich durch Rippen 111 miteinander verbunden sein. Der Bodenbereich 109 weist einen zylindrischen Endteil 113 auf, dessen Mantelfläche 115 als erstes Rotorlager innerhalb eines Vakuumpumpengehauses dient. Weiterhin sind im Bodenbereich 109 des Kunststoffrotors 101 Vertiefungen 117, z. B. in rechteckiger Form, angeordnet, welche der Aufnahme von Antriebsmitteln, wie z. B. einer Kupplung, dienen. Auf der dem Bodenbereich 109 entgegengesetzten Seite des Kunststoffrotors ragt der Innenteil 105 mit einem Zylinderteil 119 aus dem Außenteil 103 hervor, wobei die Mantelfläche 121 dieses Zylinderteils 119 ein zweites Lager des Kunststoffrotors in einem hier nicht dargestellten Gehäuse bilden kann. In dem zylindrischen Teil 119 des Kunststoffrotors ist ein metallischer Zapfen 123 eingelassen, der mit formschlüssigen Außenkonturen 125, wie z. B. einer Rändelung, bei dem Spritzgussvorgang als Einlegeteil in der Spritzgussform in den Kunststoffrotor eingegossen werden kann. Selbstverständlich sind auch andere Arten des Formschlusses, wie z. B. ein Sechskant, eine oder mehrere Anflächungen, eine Verzahnung etc. denkbar. Der Metallzapfen 123 hat primär die Funktion eines Dichtzapfens, da er mit seiner zylindrischen Oberfläche 127 gegen einen Radialwellendichtring 129 abdichtet. Durch den Wellendichtring 129 und den Dichtzapfen 123 wird der Durchbruch durch die Pumpengehäusewand 131 abgedichtet, wobei auf der Seite 133 des Pumpengehäuses die Vakuumatmosphäre, d. h. die mit einem Schmieröl versehene Luftatmosphäre, und auf der Seite 135 das Medium einer Kraftstoffförderpumpe, wie z. B. Dieselkraftstoff, anliegt. Erfindungsgemäß ist der Dichtzapfen aus Metall hergestellt, um mit dem Wellendichtring zusammen die Abdichtfunktion zu gewährleisten. Im Rahmen der Erfindung durchgeführte Versuche haben ergeben, daß es nicht möglich ist, den Wellendichtring direkt auf einer Kunststoffoberfläche laufen zu lassen, da sie zu weich ist. Zusätzlich weist der Dichtzapfen eine Verlängerung 137 auf, die als Antriebselement für die Kraftstoffförderpumpe dienen kann. Für die Funktion wesentlich ist, dass der Dichtzapfen nur als Dichtungsfunktionsteil zwischen den beiden Pumpen und als Antriebsfunktionsteil für die Kraftstoffförderpumpe dient und keine Lagerfunktion innerhalb des Pumpengehäuses übernimmt, da die Lagerfunktion durch den Kunststoffrotor selbst mit seinen beiden Lagerflächen 121 und 115 wahrgenommen werden kann und somit eine metallische Welle, Einbauraum und entsprechende Wellenlagerungen sowie Gewicht eingespart werden können. Der Dichtzapfen 123 hat eine glatte und harte Oberfläche, wobei das Metall oberflächlich oder durchgängig gehärtet sein kann, insbesondere im Bereich 127, und dient damit als Lauffläche für den Wellendichtring 129. Mit dieser Dichteinheit wird die Medientrennung zwischen Vakuum und Kraftstoff innerhalb der Tandempumpe gewährleistet. Der Rotor 101 hat ein geringes Gewicht, da er aus Kunststoff besteht, und baut kompakt, da keine separate Lagerung des Dichtzapfens 123 erforderlich ist. Der Dichtzapfen 123 dient zusätzlich als Antrieb 137 für die zweite Pumpeneinheit einer Tandempumpe, wie z. B. einer Kraftstoffförderpumpe.

## Patentansprüche

1. Vakuumpumpe, insbesondere für Bremskraftverstärker-Anlagen in Kraftfahrzeugen, mit einem Gehäuse, in dem ein angetriebener Rotor aus Kunststoff drehbar aufgenommen ist, **dadurch gekennzeichnet, dass** der Rotor auf der der Antriebsseite gegenüberliegenden Seite einen im Rotor angeordneten Zapfen aus Metall aufweist und der Zapfen (32, 123) keine Lagerstelle im Gehäuse der Vakuumpumpe aufweist.

2. Vakuumpumpe nach Anspruch 1, **dadurch gekennzeichnet, dass** der Rotor aus einem duroplastischen Kunststoff gebildet ist.

3. Vakuumpumpe nach Anspruch 1, **dadurch gekennzeichnet, dass** der Rotor massiv ausgebildet ist.

4. Vakuumpumpe nach einem der vorhergehenden Ansprüche, **dadurch gekennzeichnet, dass** der Rotor im Wesentlichen die Gestalt eines Kreiszylinders aufweist.

5. Vakuumpumpe nach einem der vorhergehenden Ansprüche, **dadurch gekennzeichnet, dass** der Rotor einen in radialer Richtung durchgehenden Schlitz für einen Flügel aufweist.

6. Vakuumpumpe nach Anspruch 1, **dadurch gekennzeichnet, dass** der Rotor an einem Ende mit einer Antriebswelle koppelbar nur an diesem Ende in dem Gehäuse gelagert ist, und an dem anderen Ende mit einer Deckscheibe ausgestattet ist, die einstückig mit dem Rotor ausgebildet ist und den Schlitz in axialer Richtung abschließt.

7. Vakuumpumpe nach Anspruch 6, **dadurch gekennzeichnet, dass** die Deckscheibe mit radialem Spiel in einer Ausnehmung in einem Teil des Gehäuses, insbesondere in einem Gehäusedeckel, zumindest teilweise aufgenommen ist.

8. Vakuumpumpe nach Anspruch 7, **dadurch gekennzeichnet, dass** die Deckscheibe mit axialem Spiel in der Ausnehmung aufgenommen ist.

9. Vakuumpumpe nach Anspruch 1, **dadurch gekennzeichnet, dass** auf der der Antriebswelle abgewandten Seite in den Rotor ein Zapfen eingegossen ist, der zum Antrieb eines weiteren Förderaggregats dient.

10. Vakuumpumpe nach Anspruch 1, **dadurch gekennzeichnet, dass** der Rotor aus einem Kunststoff auf Phenolharz- oder Epoxidharzbasis, insbesondere mit einem Anteil Polytetrafluoräthylen, gebildet ist.

11. Vakuumpumpe nach Anspruch 1, **dadurch gekennzeichnet, dass** der Rotor mit einer Gleitbeschichtung zur Minderung von Reibung und Verschleiß und/oder als Lebensdauerschmierschicht versehen ist, insbesondere aus aushärtbaren, organischen Polymeren mit einer Mindestschichtdicke von 30 ± 10 µm.

12. Vakuumpumpe nach Anspruch 1, **dadurch gekennzeichnet, dass** der Zapfen als Dichtzapfen dient und seine Oberfläche die Lauffläche für einen Wellendichtring darstellt.

13. Vakuumpumpe nach Anspruch 1 oder Anspruch 12, **dadurch gekennzeichnet, dass** der Zapfen als Einlegeteil formschlüssig in den Rotor eingespritzt oder eingegossen ist.

14. Vakuumpumpe nach Anspruch 1 oder Anspruch 12 oder Anspruch 13, **dadurch gekennzeichnet, dass** der Formschluss durch eine Rändelung oder einen Sechskant oder eine oder mehrere Anflächungen oder eine Verzahnung am Zapfen dargestellt ist.

15. Vakuumpumpe nach einem der vorhergehenden Ansprüche, **dadurch gekennzeichnet, dass** der Kunststoffrotor als Rotor für eine Tandempumpe dient, welche eine ölgeschmierte Vakuumpumpe und eine Kraftstoffförderpumpe aufweist.

16. Vakuumpumpe nach einem der vorhergehenden Ansprüche, **dadurch gekennzeichnet, dass** der Wellendichtring eine Medientrennung zwischen dem Vakuum und dem Kraftstoff realisiert/bewirkt/ermöglicht.

17. Vakuumpumpe nach einem der vorhergehenden Ansprüche, **dadurch gekennzeichnet, dass** die Oberfläche des Dichtzapfens glatt und das Metall oberflächlich oder durchgängig gehärtet ist.

18. Vakuumpumpe nach einem der vorhergehenden Ansprüche, **dadurch gekennzeichnet, dass** der Dichtzapfen zusätzlich als Antrieb für die Kraftstoffförderpumpe dient.

## Claims

1. A vacuum pump, in particular for brake booster systems in motor vehicles, having a housing in which a driven rotor of plastic is rotatably accommodated, **characterized in that** the rotor has a plug of metal located in the rotor on the side opposite the drive side, and the plug (32, 123) has no support point in the housing of the vacuum pump.

2. The vacuum pump according to Claim 1, **characterized in that** the rotor is made of a thermosetting plastic.

3. The vacuum pump according to Claim 1, **characterized in that** the rotor is designed as a single piece.

4. The vacuum pump according to one of the preceding claims, **characterized in that** the rotor substantially has the shape of a circular cylinder.

5. The vacuum pump according to one of the preceding claims, **characterized in that** the rotor has a continuous slit in the radial direction for a blade.

6. The vacuum pump according to Claim 1, **characterized in that** the rotor can be coupled at one end to a drive shaft and is supported in the housing only at that end, and is provided with a cover plate at the other end which is made in a single piece with the rotor and terminates the slit in the axial direction.

7. The vacuum pump according to Claim 6, **characterized in that** the cover plate is at least partially accommodated with radial play in a recess in a part of the housing, in particular in a housing cover.

8. The vacuum pump according to Claim 7, **characterized in that** the cover plate is accommodated in the recess with axial play.

9. The vacuum pump according to Claim 1, **characterized in that** a plug is cast into the rotor on the side facing away from the drive shaft, whose purpose is to drive another transport module.

10. The vacuum pump according to Claim 1, **characterized in that** the rotor is made of a plastic based on phenolic or epoxy resin, in particular having a portion of polytetrafluoroethylene.

11. The vacuum pump according to Claim 1, **characterized in that** the rotor is provided with a lubricatint coating to reduce friction and wear and/or as a lifetime lubricant layer, in particular of curable organic polymers with a minimum layer thickness of 30 ± 10 µm.

12. The vacuum pump according to Claim 1, **characterized in that** the plug functions as a sealing plug and its surface constitutes the running surface for a shaft sealing ring.

13. The vacuum pump according to Claim 1 or Claim 12, **characterized in that** the plug is injection molded or cast into the rotor as a positive fitting insert.

14. The vacuum pump according to Claim 1 or Claim 12 or Claim 13, **characterized in that** the positive lock is represented by knurling or a hexagonal form or one or more flat sides or gearing on the plug.

15. The vacuum pump according to one of the preceding claims, **characterized in that** the plastic rotor functions as the rotor for a tandem pump, which has an oil-lubricated vacuum pump and a fuel transporting pump.

16. The vacuum pump according to one of the preceding claims, **characterized in that** the shaft sealing ring realizes/effects/enables a separation of media between the vacuum and the fuel.

17. The vacuum pump according to one of the preceding claims, **characterized in that** the surface of the sealing plug is smooth, and that the metal is hardened on the surface or throughout.

18. The vacuum pump according to one of the preceding claims, **characterized in that** the sealing plug functions additionally as the drive for the fuel transporting pump.

## Revendications

1. Pompe à vide, en particulier pour des systèmes de servofreins de véhicules automobiles, comprenant un corps dans lequel est logé en rotation un rotor entraîné, en matière plastique, **caractérisée en ce que** le rotor présente, sur le côté placé à l'opposé du côté d'entraînement, un tourillon en métal, disposé dans le rotor, et le tourillon (32, 123) ne présente aucun point d'appui dans le corps de la pompe à vide.

2. Pompe à vide selon la revendication 1, **caractérisée en ce que** le rotor est formé par une matière plastique thermodurcissable.

3. Pompe à vide selon la revendication 1, **caractérisée en ce que** le rotor est configuré de façon massive.

4. Pompe à vide selon l'une quelconque des revendications précédentes, **caractérisée en ce que** le rotor présente pratiquement la forme d'un cylindre circulaire.

5. Pompe à vide selon l'une quelconque des revendications précédentes, **caractérisée en ce que** le rotor présente, pour une ailette, une fente continue dans le sens radial.

6. Pompe à vide selon la revendication 1, **caractérisée en ce que** le rotor, au niveau d'une extrémité, est monté en comportant un arbre d'entraînement pouvant être couplé seulement à cette extrémité, dans le corps et, au niveau de l'autre extrémité, est doté d'un flasque de recouvrement qui est configuré en formant une seule et même pièce avec le rotor et obture la fente dans la direction axiale.

7. Pompe à vide selon la revendication 6, **caractérisée en ce que** le flasque de recouvrement est logé, au moins partiellement, en comportant un jeu radial dans un creux formé dans une partie du corps, en particulier dans un couvercle du corps.

8. Pompe à vide selon la revendication 7, **caractérisée en ce que** le flasque de recouvrement est logé, dans le creux, en comportant un jeu axial.

9. Pompe à vide selon la revendication 1, **caractérisée en ce qu'**un tourillon est moulé, dans le rotor, sur le côté placé à l'opposé de l'arbre d'entraînement, tourillon qui sert à l'entraînement d'un autre groupe d'alimentation.

10. Pompe à vide selon la revendication 1, **caractérisée en ce que** le rotor est constitué d'une matière plastique fabriquée à base de résine phénolique ou de résine époxyde, en particulier en comportant une proportion de polytétrafluoroéthylène.

11. Pompe à vide selon la revendication 1, **caractérisée en ce que** le rotor est doté d'un revêtement de glissement pour atténuer le frottement et l'usure et / ou d'une couche de graisse à vie, en particulier de polymères organiques durcissables ayant une épaisseur de couche minimum de 30 ± 10 µm.

12. Pompe à vide selon la revendication 1, **caractérisée en ce que** le tourillon sert de tourillon d'étanchéité, et sa surface représente la surface de portée pour un joint d'arbre.

13. Pompe à vide selon la revendication 1 ou la revendication 12, **caractérisée en ce que** le tourillon est moulé ou moulé par injection comme pièce d'insertion, par sûreté de forme dans le rotor.

14. Pompe à vide selon la revendication 1 ou la revendication 12 ou la revendication 13, **caractérisée en ce que** la liaison par sûreté de forme est représentée, sur le tourillon, par un moletage ou par un hexagone ou par un ou plusieurs lamages ou bien par une denture.

15. Pompe à vide selon l'une quelconque des revendications précédentes, **caractérisée en ce que** le rotor en matière plastique sert de rotor pour une pompe tandem qui présente une pompe à vide lubrifiée et une pompe d'alimentation en carburant.

16. Pompe à vide selon l'une quelconque des revendications précédentes, **caractérisée en ce que** le joint d'arbre réalise / crée / permet une séparation des milieux, entre le vide et le carburant.

17. Pompe à vide selon l'une quelconque des revendications précédentes, **caractérisée en ce que** la surface du tourillon d'étanchéité est lisse et le métal durci en surface ou de façon continue.

18. Pompe à vide selon l'une quelconque des revendications précédentes, **caractérisée en ce que** le tourillon d'étanchéité sert en outre d'entraînement pour la pompe d'alimentation en carburant.
